# EUROPÄISCHE PATENTSCHRIFT

(11) **EP 1 449 496 B1**
(45) Veröffentlichungstag und Bekanntmachung des Hinweises auf die Patenterteilung: **10.09.2008**
(21) Anmeldenummer: 04004092.5
(22) Anmeldetag: 23.02.2004
(51) Int. Cl.: A61C 17/40

(54) **Zahnbürste**
Toothbrush
Brosse à dents

(30) Priorität: 24.02.2003 DE 10307952
(43) Veröffentlichungstag der Anmeldung: 25.08.2004
(73) Patentinhaber: Valentin, Herbert, Dr., 64658 Fürth (DE)
(72) Erfinder: Valentin, Herbert, Dr., 64658 Fürth (DE)

(56) Entgegenhaltungen:
- DE-A- 3 529 861
- DE-A- 19 803 311
- GB-A- 2 359 739

## Beschreibung

Die Erfindung betrifft eine Zahnbürste mit zwei borstentragenden Kopfteilen, die kraftschlüssig mit jeweils einem elastischen Halsteil eines Halses zu einem elastischen Teilsystem verbunden sind, mit einem mit dem Hals verbundenen Handapparat zum Halten der Zahnbürste, und mit einer Antriebseinheit, durch die jedes Teilsystem in Schwingungen versetzbar ist.
Zahnbürsten mit einem elektrischem Antrieb sind in unterschiedlichen Ausführungen bekannt geworden. Jedoch sind sie in der Reinigungswirkung noch immer nicht vergleichbar mit Handzahnbürsten, sofern diese fachgerecht zum Einsatz kommen. Problemzonen bei der Zahnreinigung mittels Elektrozahnbürsten sind insbesondere Interdentalräume und Vertiefungen. Dies haben Untersuchungen der Stiftung Warentest gezeigt, welche in dem Heft Test 3/94 veröffentlicht wurden. Bei den getesteten elektromotorisch betriebenen Zahnbürsten gelangen unterschiedliche Systeme zur Bürstenbewegung zum Einsatz. Beispielsweise sind Bürstenköpfe mit einer Schwingbewegung von ca. 30° um eine durch den Bürstenschaft verlaufende Achse bekannt geworden. Bei manchen Systemen wird eine zusätzliche Längsbewegung überlagert. Ferner kann eine elliptische Bewegung des Bürstenkopfes in der Ebene der Borstenbasis erfolgen.

Zur Verbesserung der Reinigungswirkung sind zwischenzeitlich Putzsysteme bekannt geworden, bei denen beim Einsatz von Rundbürsten eine Drehschwingung der Bürste zusätzlich von einer Schwingung in Richtung der Borstenachsen überlagert wird. Da auch bei dieser bekannten Bürste die Wischbewegung gegenüber der Stocherbewegung vorherrscht, können die Borsten nicht weit genug in Vertiefungen eindringen und auch nicht dort verweilen, um die angestrebte optimale Reinigungswirkung zu entfalten.

Aus der WO 0128 452 schließlich ist eine elektrische Zahnbürste bekannt geworden, bei der der borstentragende Kopfteil mittels einer mechanischen Vibrationseinrichtung in Schwingungen versetzt wird. Dabei ist der elektrische Antrieb der Vibrationseinrichtung ebenfalls direkt in den Kopfteil integriert, so dass von der in einem Handgriff untergebrachten Stromquelle lediglich elektrische Versorgungsleitungen in den Kopfbereich der Zahnbürste zu führen sind.

Aus der DE 198 03 311 A ist eine elektrische Zahnbürste mit zwei ring- bzw. kreisförmigen borstentragenden Kopfteilen bekannt geworden, welche konzentrisch und drehbar auf einer gemeinsamen Achse befestigt sind. Der Antrieb der beiden Kopfteile erfolgt über eine hin- und hergehende Schubstange, die an ihrem Kopfseitigen Endbereich eine Gabelung mit zwei elastisch ausgebildeten Armen aufweist. Dabei ist jeder Arm außerachsig mit einemder beiden Kopfteilen drehbar verbunden.

In der DE 35 29 61 A schließlich ist eine Zahnbürste offenbart, die zwei elastische Halsteile mit zugeordneten borstentragenden Kopfteilen aufweist, die beweglich mit einem Handapparat verbunden sind. Jedes Halsteil ist für sich mit einem Pleuelantrieb versehen, wobei diese Antriebe innerhalb des Handapparates angeordnet sind.

Nachteilig bei all diesen bekannten elektrischen Zahnbürsten ist eine nicht ausreichende Reinigung von Zahnzwischenräumen und Vertiefungen aufgrund einer nicht vorhandenen bzw. einer nicht ausreichend zur Wirkung kommenden stochernden Bewegungskomponente des Borstenbündels senkrecht zur Längsachse des Borstenkopfes. Darüber hinaus sind die bekannten Zahnbürsten, die für einphasige Stocherbewegungen konstruiert wurden, nach wie vor mit Impedanzproblemen behaftet. Es fehlt eine ausreichende Masseträgheit als Bezug, gegen die die einphasige Schwingungskraft aufgebaut werden könnte. Das heißt, beim Andrücken der Bürste an die Zähne geht trotz laufenden Motors die Amplitude der Bürstenschwingung stark zurück und stattdessen vibriert der Handapparat in der Hand des Benutzers.

Der Erfindung liegt demnach die Aufgabe zugrunde, eine Zahnbürste der eingangs genannten Art dahingehend weiter zu bilden, dass mit geringem konstruktiven Aufwand bei geringem Massevolumen der Systeme eine gute Reinigung von Zahnzwischenräumen und Vertiefungen erreicht wird.

Diese Aufgabe wird bei einer Zahnbüste der eingangs genannten Art erfindungsgemäß dadurch gelöst, dass jedes Teilsystem für sich an die Antriebseinheit derart gekoppelt ist, dass beide Teilsysteme mit ihren Kopfteilen im Betrieb in einen zueinander phasenverschobenen Schwingungszustand senkrecht zur Kopfteillängsachse zu einer stochernden Bewegung der Borsten versetzbar sind.

Die Phasenverschiebung der Schwingungen beträgt nach einem weiteren Merkmal etwa 180°. Die beiden Teilsysteme sind vorzugsweise paarig, dass heißt, jeweils mit etwa der gleichen Formgebung ausgebildet. Die Anordnung der beiden borstentragenden Kopfteile kann aber auch vollkommen asymmetrisch versetzt und ineinandergreifend verteilt sein.

Die vorgeschlagene Zahnbürste ermöglicht eine wesentlich verbesserte Reinigung der Zähne, da die Borsten der beiden Kopfteile durch die vorherrschenden Longitudinalschwingungen jeweils im Rhythmus der vorgegebenen Phasenverschiebung entsprechend einer stochernden Bewegung aktiv in Vertiefungen geführt werden und dort vibrierend verweilen.

Beobachtungen während der Anwendung haben gezeigt, dass die Borstenbüschel flächig auffächern und die Borstenenden bei Handbewegungen des Anwenders nahezu jede Vertiefung "durchschwimmen".

Dadurch, dass der Erfindung im Grunde das Gegentaktprinzip (push-pull) zugrunde liegt, wird die abgefederte Andruckkraft des Anwenders periodisch auf die eine oder andere Borstengruppe der beiden Kopfteile verlagert. Die Kräfte der beiden Schwingungen wirken nur im Bereich der Borsten und neutralisieren sich, da um 180° phasenverschoben, bereits am Ansatz der beiden Teilsysteme, wodurch der Handapparat nahezu vibrationsfrei bleibt. Im Mundbereich sind entsprechend nur lokale Vibrationen an den Zähnen und berührenden Weichteilen zu spüren, während die Krafteinwirkung auf den Schädel insgesamt konstant und ausgeglichen ist.

Zur Erzeugung des phasenverschobenen Schwingungszustandes der beiden Kopfteile der Zahnbürste können herkömmliche mechanische oder auch elektromagnetisch wirkende Antriebssysteme mit den entsprechenden Taktgebern eingesetzt werden. Auch sind hydromechanische Antriebsysteme denkbar, bei denen der Antrieb mittels eines Wasserstrahls nach dem Turbinenprinzip oder auch nach dem Fluidik-Prinzip erfolgt.

Nach einem weiteren Merkmal der Erfindung kommt für die Erzeugung des um etwa 180° phasenverschobenen Schwingungszustandes der beiden Kopfteile eine zentrale Antriebswelle zum Einsatz, die in ihrem kopfseitigen Endbereich über außerachsige, jeweils um etwa 180° zueinander versetzte Lagerverbindungen verfügt, die drehbar mit den beiden Halsteilen der beiden Teilsysteme verbunden sind. Beispielsweise können die Verbindungen zwischen der Antriebswelle und jedem Teilsystem über ein exzenterartiges Steuerkurvenelement ausgebildet sein.

Als konstruktiv und fertigungstechnisch besonders einfach darstellbar erweist sich jedoch nach einem weiteren Merkmal der Erfindung der Einsatz einer zentralen Antriebswelle, deren kopfseitiges Ende dergestalt gekröpft ist, das heißt, deren Wellenende gegen die Längsachse parallel versetzt ist. Die Antriebsverbindung zu den elastischen Teilsystemen erfolgt über in Längsachse der Welle versetzt angebrachte Rotationslager. Dabei ist in der bevorzugten Ausführungsform das eine Lager im Bereich der Kröpfung und das zweite im Bereich außerhalb der Kröpfung vorgesehen.

Erfindungsgemäß ist zudem die Antriebswelle an ihrem anderen Ende mit der Achse eines im Handapparat vorgesehenen Antriebsmotor pendeltolerant, das heißt, kardanisch verbunden, um dem Federweg des Bürstenkopfes durch Andruck des Anwenders folgen zu können.

Durch die erfindungsgemäße Ausbildung der zentralen Antriebswelle, deren phasenverschobene Ankopplung jeweils an die beiden Teilsysteme sowie deren bewegliche Verbindung mit dem Antriebsmotor werden im Betrieb beide borstentragenden Kopfteile in eine kreisförmige Schwingung um die Längsachse der Antriebswelle versetzt, dass heißt bezogen auf jedes Teilsystem ergibt sich als Enveloppe des Schwingungszustandes ein spitzwinkliger Kegel.

Fast jeder Reinigungsvorgang beinhaltet zwei gegensätzliche Aspekte. Einerseits soll die der Oberflächliche anhaftende Schmutzschicht möglichst schnell und gründlich entfernt werden, wobei andererseits die Oberfläche unbedingt zu schonen ist. Zur schonenden Gebissreinigung sind daher schon mehrere Methoden bekannt, die auf einer Begrenzung der Krafteinwirkung der Bürsten beruhen. Sowohl bei Handzahnbürsten als auch bei elektrisch betriebenen Zahnbürsten wird die Summe der Andruckkraft durch einen konstruktiv vorgesehenen elastischen Abschnitt im Griff bzw. Gelenk im Handapparat abgefedert. Die elastische Kraftbegrenzung ist auch bei dem hier vorgeschlagenen Prinzip verwirklicht. Zusätzlich wird konstruktiv dafür gesorgt, dass überhöhte Kräfte, die von starr gestreckten Borsten an den Borstenenden ausgehen könnten, vermieden werden. Durch den Knick der Borstenbasen gegenüber der Bürstenhälse wird erreicht, dass die Borsten schräg zur Schwingungsrichtung stehen. Außerdem enthält die Schwingbewegung der Borstenbasen durch den Rotationsantrieb eine transversale Bewegungskomponente. So kommt es zwangsweise zum Durchbiegen der Borsten, wodurch diese bei Belastung federnd einknicken. Durch diese erfindungsgemäße Ausbildung wird erreicht, dass jede einzelne Borste nur mit begrenzter Kraft auf bewegungseinschränkende Strukturen, wie zum Beispiel Taschengrund, einwirken kann, wodurch Mikroläsionen im Bereich des Zahnfleisches und Parodontiums vermieden werden.

Da der Antriebsmotor lediglich die geringe Kraftdifferenz zwischen den federnden Bürstenschenkeln und nicht wie bei Vibrationsbürsten im Einphasenbetrieb auch die Andruckkraft selbst zu überwinden hat, reicht ein für Elektrozahnbürsten üblicher Kleinmotor bereits ohne Getriebeuntersetzung völlig aus. Ohne Untersetzung ist die Frequenz der erzeugten Reinigungsschwingung ca. um den Faktor drei bis fünf größer als bei den meisten elektromotorisch betriebenen Zahnbürsten, wodurch die Reinigung schneller ausgeführt werden kann. Typisch für die vorgeschlagene Anordnung ist eine Frequenz von 9000 Schwingungen pro Minute. Die Intensität der Reinigungsschwingung, das heißt, deren Amplitude in senkrechter Richtung der Kopfteilachse, hängt direkt vom Grad der Kröpfung der Antriebsachse ab. Die Amplitude sollte auf die Elastizität der Borsten abgestimmt werden.

Die nach einem weiteren Merkmal der Erfindung vorgeschlagene unterschiedliche Länge der Borstenbüschel erlaubt langen Borsten das tiefe Eindringen in oder durch den Zahnzwischenraum, während kürzere Borsten zugleich die konvexen Zahnaußenflächen reinigen.

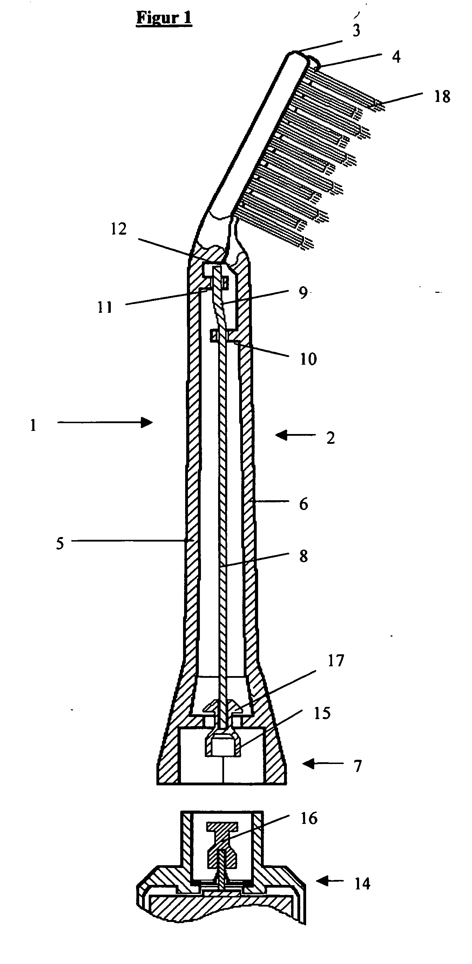

Weitere Erläuterungen zu der Erfindung sind den in den Figuren 1 bis 5 schematisch dargestellten Ausführungsbeispielen zu entnehmen. Für gleiche Vorrichtungsteile ist in den Figuren jeweils die gleiche Bezugsziffer vorgesehen.

Figur 1 zeigt einen Längsschnitt durch eine bevorzugte Ausführungsform einer elektrisch angetriebenen Zahnbürste gemäß der Erfindung.

Im einzelnen besteht die Zahnbürste aus zwei zueinander im wesentlichen parallel angeordneten Teilsystemen 1 und 2 jeweils mit oberen borstentragenden Kopfteilen 3 und 4 sowie mit diesen kraftschlüssig verbundenen elastischen Halsteilen 5 und 6. Zur Optimierung der Borstenstellung im Hinblick auf die zu reinigenden Zähnen ist die Verbindung zwischen den Kopfteilen und dem jeweils zugehörigen Halsteil abgeknickt ausgebildet. Hierdurch sind auch die Enden der Zahnreihen bequem erreichbar.

Beide Halsteile 5 und 6 sind über ein Koppelteil 7 starr zusammengehalten, wobei vorzugsweise eine einfach zu fertigende Steckverbindung zur Anwendung kommt, bei der die beiden Halsteile 5 und 6 im Bereich des Koppelteiles 7 durch angebrachte steckbare Führungselemente 13 fixiert und von einrastenden Krallen zusammengehalten sind.

Der Antrieb der beiden Kopfteile 3 und 4 erfolgt über eine zentrale Antriebswelle 8, deren kopfteilseitiges Ende 9 gekröpft ausgebildet ist. Im Bereich der Kröpfung 9 ist die Antriebswelle 8 über ein Rotationslager 11 mit dem Halsteil 5 des Teilsystems 1 kraftschlüssig verbunden. Die Verbindung zwischen dem Halsteil 6 des Teilsystems 2 und der Antriebswelle 8 ist demgegenüber über ein außerhalb des Kröpfungsbereichs der Antriebswelle 8 vorgesehenes weiteres Rotationslager 10 hergestellt.
Im kopfnahen Endbereich der Antriebswelle 8 weist die Zahnbürste zweckmäßigerweise ein seitlich freiliegendes Wellenende auf. Über einen Anschlag 12 im Halsteil 5 wird zudem ein Verschieben der Antriebswelle in Axialrichtung verhindert. Im vorliegenden Ausführungsbeispiel ist das Koppelteil 7 mit einem Handapparat 14 über eine Steckverbindung 15,16, die antriebsseitig einen Anschlag 17 zum Sichern der innen liegenden Antriebswelle gegen Herausziehen aufweist, verbunden.
Die Verbindung zwischen der Antriebswelle 8 und der Achse des Antriebsmotors ist im Hinblick auf die Durchbiegung der beiden Teilsysteme sowie der mit dieser verbundenen Antriebswelle pendeltolerant bzw. kardanisch ausgebildet.

Die Borsten 18 der beiden Kopfteile 3 und 4 sind zur bereits geschilderten Optimierung der Reinigungswirkung unterschiedlich lang ausgebildet, wobei in der Regel die kurzen Bündel etwa 60-90% der Länge der langen Borsten aufweisen. Zur Vermeidung von Verletzungen sind die Borsten abgerundet ausgebildet.

Bei Benutzung der Zahnbürste werden aufgrund des abgekröpften Endbereiches der zentralen Antriebswelle 8 und der speziellen Ankopplung an die beiden Halsteile 5 und 6 über die Rotationslager 11 und 10, die Kopfteile 3 und 4 jeweils in eine um 180° phasenverschobene Rotationsschwingung versetzt. Die in den beiden Teilsystemen 1 und 2 während der Benutzung der Zahnbürste auftretenden Kräfte heben sich aufgrund der Gegenphasigkeit der Schwingungen weitgehend auf, so dass sich das Gesamtsystem im Gleichgewichtszustand befindet und daher auch keine Kräfte in unerwünschter Weise auf den Handapparat selbst übertragen werden.
Die spezielle Art der Schwingung der beiden Kopfteile 3 und 4 führt aufgrund der Schwingungskomponente senkrecht zur Längsachse der Kopfteile zu einer gewünschten stochernden Bewegung der Borsten mit der damit verbesserten Reinigungswirkung der Zahnzwischenräume und Vertiefungen.

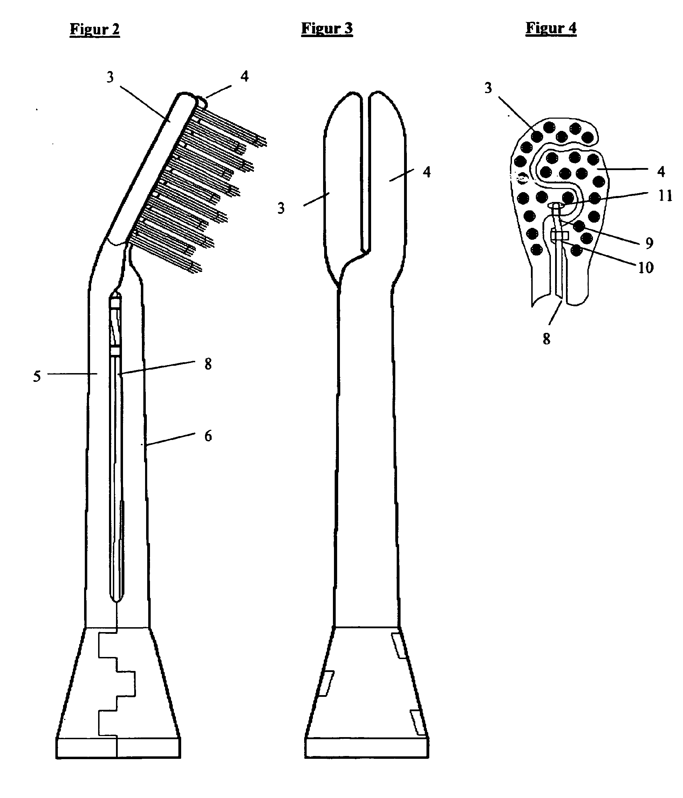

Die Figuren 2 und 3 zeigen in verschiedenen Schnitten eine weitere Ausführungsform der vorgeschlagenen Zahnbürste, bei der die beiden Halsteile 5 und 6 wannenförmig ausgebildet sind und jeweils mit einer Drehung von 90° in die beiden Kopfteile 3 und 4 übergehen. Die hier dargestellte Antriebswelle 8 befindet sich im Inneren der beiden wannenförmigen Halsteile.

Gemäß Figur 3 sind die beiden Kopfteile 3 und 4 zueinander asymmetrisch und ineinandergreifend zur optimalen Anordnung der Borstenbüschel ausgebildet. Dabei ist der Exzenterantrieb zur Vermeidung von Systemresonanzen in den Bürstenkopf integriert. Die weiteren Vorrichtungsteile 8, 9, 10 und 11 entsprechen den bereits mit den Figuren 1 bis 3 erläuterten.

## Patentansprüche

1. Zahnbürste mit zwei borstentragenden Kopfteilen, die kraftschlüssig mit jeweils einem elastischen Halsteil eines Halses zu einem elastischen Teilsystem verbunden sind, mit einem mit dem Hals verbundenen Handapparat zum Halten der Zahnbürste, und mit einer Antriebseinheit, durch die jedes Teilsystem in Schwingungen versetzbar ist, **dadurch gekennzeichnet, dass** jedes Teilsystem (1,2) für sich an die Antriebseinheit derart gekoppelt ist, dass beide Teilsysteme (1,2) mit ihren Kopfteilen (3,4) im Betrieb in einen zueinander phasenverschobenen Schwingungszustand senkrecht zur Kopfteillängsachse zu einer stochernden Bewegung der Borsten versetzt sind.

2. Zahnbürste nach Anspruch 1, **dadurch gekennzeichnet, dass** die Teilsysteme zueinander paarig ausgebildet und handgriffseitig über ein Koppelteil (7) starr zusammengehalten sind.

3. Zahnbürste nach Anspruch 1 oder 2, **dadurch gekennzeichnet, dass** die Phasenverschiebung der Schwingungen der beiden Kopfteile (3,4) bei etwa 180° liegt.

4. Zahnbürste nach einem der Ansprüche 1-3, **dadurch gekennzeichnet, dass** der phasenverschobene Schwingungszustand der beiden Kopfteile durch mechanische Kraftübertragung eingestellt wird.

5. Zahnbürste nach Anspruch 4, **dadurch gekennzeichnet, dass** die mechanische Kraftübertragung mittels einer zentralen Antriebswelle (8) erfolgt, welche in ihrem kopfseitigen Endbereich über außerachsige, jeweils um etwa 180° zueinander versetzte Anschläge mit den beiden Teilsystemen drehbar verbunden ist.

6. Zahnbürste nach Anspruch 5, **dadurch gekennzeichnet, dass** die Antriebswelle (8) am antriebsseitigen Ende mit der Achse eines Antriebsmotors pendeltolerant verbunden ist.

7. Zahnbürste nach einem der Ansprüche 1-6, **dadurch gekennzeichnet, dass** der kopfseitige Endbereich (9) der Antriebswelle (8) doppelt gekröpft ausgebildet und zumindest eines der beiden Halsteile (5) im Bereich der Kröpfung (9) über eine Lagerverbindung (11) kraftschlüssig an die Welle angekoppelt ist.

8. Zahnbürste nach Anspruch 7, **dadurch gekennzeichnet, dass** das zweite Halsteil (6) über eine Lagerverbindung (10) außerhalb des Bereiches der Kröpfung kraftschlüssig an die Welle (8) angekoppelt ist.

9. Zahnbürste nach einem der Ansprüche 1-8, **dadurch gekennzeichnet, dass** das kopfnahe Ende der Welle freiliegt und eine Wellenverschiebung in Axialrichtung durch einen Anschlag (12) begrenzt ist.

10. Zahnbürste nach einem der Ansprüche 1-9, **dadurch gekennzeichnet, dass** die beiden borstentragenden Kopfteile (3,4) jeweils zur Längsachse der zugeordneten Halsteile (5,6) abgeknickt sind.

11. Zahnbürste nach einem der Ansprüche 1-10, **dadurch gekennzeichnet, dass** die beiden Halsteile der Teilsysteme in etwa wannenförmig ausgebildet sind und jeweils mit einer Verdrehung um etwa 90° um die Längsachse der Kopfteile in diese übergehen.

12. Zahnbürste nach einem der Ansprüche 1-11, **dadurch gekennzeichnet, dass** die beiden Halsteile (5,6) im Bereich des Koppelteiles (7) durch angebrachte steckbare Führungselemente fixiert und von einrastenden Krallen zusammengehalten sind.

13. Zahnbürste nach einem der Ansprüche 1-12, **dadurch gekennzeichnet, dass** das Koppelteil (7) mit dem Handapparat (14) über eine Steckverbindung (15,16), welche antriebsseitig einen ringförmigen Anschlag (17) zum Sichern der innenliegende Antriebswelle gegen Herausziehen-aufweist, verbunden ist.

14. Zahnbürste nach einem der Ansprüche 1-13, **dadurch gekennzeichnet, dass** die Borstenbüschel (18) der Kopfteile (3,4) unterschiedliche Längen aufweisen, wobei die Länge der kurzen Büschel bevorzugt zwischen 60 und 90% der Länge der langen Borsten beträgt.

15. Zahnbürste nach einem der Ansprüche 1-14, **dadurch gekennzeichnet, dass** die Enden der Borsten (18) abgerundet ausgebildet sind.

16. Zahnbürste nach einem der Ansprüche 1-15, **dadurch gekennzeichnet, dass** die beiden Kopfteile zueinander asymmetrisch und ineinandergreifend sind.

17. Zahnbürste nach einem der Ansprüche 1-3, **dadurch gekennzeichnet, dass** der phasenverschobene Schwingungszustand der beiden Teilsysteme mittels einer Antriebseinheit mit elektromagnetischer Kraftübertragung bewirkt wird.

18. Zahnbürste nach einem der Ansprüche 1-3, **dadurch gekennzeichnet, dass** der phasenverschobene Sehwingungszustand der beiden Teilsysteme mittels einer Antriebseinheit mit hydromechanischer Kraftübertragung bewirkt wird.

## Claims

1. Toothbrush with two bristle-carrying head parts which are each connected frictionally to an elastic neck part of a neck to form an elastic part system, with a hand apparatus for holding the toothbrush connected to the neck, and with a driving unit through which each part system can be made to oscillate, **characterised in that** each part system (1, 2) per se is coupled to the driving unit such that in operation the two part systems (1, 2) with their head parts (3, 4) are brought into a mutually phase-shifted oscillating state perpendicular to the longitudinal axis of the head part to produce a picking movement of the bristles.

2. Toothbrush according to claim 1, **characterised in that** the part systems are paired with one another and on the handle side are held together rigidly by means of a coupling part (7).

3. Toothbrush according to claim 1 or 2, **characterised in that** the phase shift of the oscillations of the two head parts (3, 4) is approximately 180°.

4. Toothbrush according to one of claims 1 to 3, **characterised in that** the phase-shifted oscillating state of the two head parts is set by mechanical transmission of force.

5. Toothbrush according to claim 4, **characterised in that** the mechanical transmission of force is effected by means of a central driving shaft (8) which in its end region on the head side is connected rotatably to the two part systems by means of eccentric stops each offset by approximately 180° to one another.

6. Toothbrush according to claim 5, **characterised in that** at the driving end the driving shaft (8) is connected to the shaft of a driving motor in an oscillation-tolerant manner.

7. Toothbrush according to one of claims 1 to 6, **characterised in that** the end region (9) of the driving shaft (8) on the head side is double cranked and at least one of the two neck parts (5) is coupled frictionally to the shaft in the area of the crank (9) by means of a bearing connection (11).

8. Toothbrush according to claim 7, **characterised in that** the second neck part (6) is coupled frictionally to the shaft (8) by means of a bearing connection (10) outside the region of the crank.

9. Toothbrush according to one of claims 1 to 8, **characterised in that** the end of the shaft near the head is exposed and displacement of the shaft in the axial direction is limited by a stop (12).

10. Toothbrush according to one of claims 1 to 9, **characterised in that** the two bristle-carrying head parts (3, 4) are in each case angled in relation to the longitudinal axis of the associated neck parts (5, 6).

11. Toothbrush according to one of claims 1 to 10, **characterised in that** the two neck parts of the part systems are roughly trough-shaped and in each case pass into the head parts with a twist of approximately 90° about the longitudinal axis of the head parts.

12. Toothbrush according to one of claims 1 to 11, **characterised in that** the two neck parts (5, 6) are fixed in the area of the coupling part (7) by attached plug-in guiding elements and held together by locking claws.

13. Toothbrush according to one of claims 1 to 12, **characterised in that** the coupling part (7) is connected to the hand apparatus (14) by means of a plug-in connection (15, 16) which on the drive side exhibits a ring-shaped stop (17) to prevent the internal driving shaft from being pulled out.

14. Toothbrush according to one of claims 1 to 13, **characterised in that** the tufts of bristles (18) of the head parts (3, 4) exhibit different lengths, the length of the short tufts preferably being between 60 and 90% of the length of the long bristles.

15. Toothbrush according to one of claims 1 to 14, **characterised in that** the ends of the bristles (18) are rounded.

16. Toothbrush according to one of claims 1 to 15, **characterised in that** the two head parts are asymmetrical in relation to one another and engage in one another.

17. Toothbrush according to one of claims 1 to 3, **characterised in that** the phase-shifted oscillating state of the two part systems is produced by means of a driving unit with electromagnetic transmission of force.

18. Toothbrush according to one of claims 1 to 3, **characterised in that** the phase-shifted oscillating state of the two part systems is produced by means of a driving unit with hydromechanical transmission of force.

## Revendications

1. Brosse à dents comportant deux parties de tête munies de poils de brosserie, ces parties de tête étant reliées par une liaison par la force chacune à une partie élastique d'un col pour former un système partiel élastique, ainsi qu'un appareil à main relié au col pour tenir la brosse à dents et une unité d'entraînement qui fait vibrer chaque système partiel,
**caractérisée en ce que**
chaque système partiel (1, 2) est couplé à l'unité d'entraînement de façon que les deux systèmes partiels (1, 2) et leurs parties de tête (3, 4) soient mises en fonctionnement dans un état d'oscillation déphasé, de mouvement de piquage perpendiculaire à l'axe longitudinal de la partie de tête.

2. Brosse à dents selon la revendication 1,
**caractérisée en ce que**
les systèmes partiels sont adaptés pour former une paire et sont maintenus assemblés rigidement du côté de la poignée par une pièce de couplage (7).

3. Brosse à dents selon la revendication 1 ou 2,
**caractérisée en ce que**
le déphasage des oscillations des deux parties de tête (3, 4) est de l'ordre de 180°.

4. Brosse à dents selon les revendications 1 à 3,
**caractérisée en ce que**
l'état d'oscillation déphasé des deux parties de tête est réglé par transmission de forces mécaniques.

5. Brosse à dents selon la revendication 4,
**caractérisée en ce que**
la transmission de forces mécaniques se fait à l'aide d'un arbre d'entraînement central (8) dont la zone d'extrémité côté tête est reliée en rotation aux deux systèmes partiels par des butées désaxées, décalées respectivement d'environ 180°.

6. Brosse à dents selon la revendication 5,
**caractérisée en ce que**
l'arbre d'entraînement (8) a une extrémité côté entraînement reliée à l'axe d'un moteur d'entraînement de façon à tolérer un mouvement pendulaire.

7. Brosse à dents selon les revendications 1 à 6,
**caractérisée en ce que**
la zone d'extrémité côté tête (9) de l'arbre d'entraînement(8) est cintrée deux fois et au moins l'une des deux parties de col (5) est couplée au niveau du cintrage (9) par une liaison de palier (11), constituant une liaison par la force avec l'arbre.

8. Brosse à dents selon la revendication 7,
**caractérisée en ce que**
la seconde partie de col (6) est couplée par une liaison par la force à l'arbre (8) avec une liaison de palier (10) en dehors de la zone de la partie cintrée.

9. Brosse à dents selon les revendications 1 à 8,
**caractérisée en ce que**
l'extrémité de l'arbre proche de la tête est dégagée et le coulissement de l'arbre dans la direction axiale est limité par une butée (12).

10. Brosse à dents selon les revendications 1 à 9,
**caractérisée en ce que**
les deux parties de tête (1, 4) portant des poils de brosserie sont repliées respectivement par rapport à l'axe longitudinal des parties de col (5, 6) correspondantes.

11. Brosse à dents selon les revendications 1 à 10,
**caractérisée en ce que**
les deux parties de col des systèmes partiels ont sensiblement une forme de cuvette et rejoignent les parties de tête par une torsion d'environ 90° autour de l'axe longitudinal.

12. Brosse à dents selon les revendications 1 à 11,
**caractérisée en ce que**
dans la zone de la partie de couplage (7), les parties de col (5, 6) sont fixées par des éléments de guidage enfichables et elles sont maintenues réunies par des griffes qui s'accrochent.

13. Brosse à dents selon les revendications 1 à 12,
**caractérisée en ce que**
la partie de tête (7) est reliée à l'appareil à main (14) par une liaison par enfichage (15, 16) qui, côté entraînement, comporte une butée annulaire (17) pour bloquer l'arbre d'entraînement intérieur contre son extraction.

14. Brosse à dents selon les revendications 1 à 13,
**caractérisée en ce que**
les touffes de poils de brosserie (18) des parties de tête (3, 4) ont des longueurs différentes, et les longueurs des touffes courtes représentent de préférence entre 60 et 90 % de la longueur des touffes longues.

15. Brosse à dents selon les revendications 1 à 14,
**caractérisée en ce que**
les extrémités des touffes (18) sont arrondies.

16. Brosse à dents selon les revendications 1 à 15,
**caractérisée en ce que**
les deux parties de tête sont asymétriques et s'interpénètrent.

17. Brosse à dents selon les revendications 1 à 13,
**caractérisée en ce que**
l'état d'oscillation déphasé des deux systèmes partiels est assuré par une unité d'entraînement à transmission électromagnétique des forces.

18. Brosse à dents selon les revendications 1 à 3,
**caractérisée en ce que**
l'état d'oscillation déphasé des deux systèmes partiels est assuré par une unité d'entraînement à transmission hydromécanique des forces.
